# EUROPEAN PATENT SPECIFICATION

(11) **EP 3 079 066 B1**
(45) Date of publication and mention of the grant of the patent: **23.08.2017**
(21) Application number: 15163080.3
(22) Date of filing: 10.04.2015
(51) Int. Cl.: G06F 11/20

(54) **SYSTEM OF ELECTRONIC MODULES HAVING A REDUNDANT CONFIGURATION**
SYSTEM AUS ELEKTRONISCHEN MODULEN MIT EINER REDUNDANZKONFIGURATION
SYSTÈME DE MODULES ÉLECTRONIQUES PRÉSENTANT UNE CONFIGURATION REDONDANTE

(43) Date of publication of application: 12.10.2016
(73) Proprietor: Politechnika Lodzka, 90-924 Lodz (PL)
(72) Inventor: Jung, Jaroslaw, 94-054 Lodz (PL); Polanowski, Piotr, 93-378 Lodz (PL); Kielbik, Rafal, 95-070 Aleksandrow Lodzki (PL); Halagan, Krzysztof, 90-425 Lodz (PL); Zatorski, Witold, 93-249 Lodz (PL); Ulanski, Jacek, 95-006 Brojce (PL); Napieralski, Andrzej, 95-070 Aleksandrow Lodzki (PL); Pakula, Tadeusz, deceased (PL)
(74) Representative: Kancelaria Eupatent.pl Sp. z.o.o

(56) References cited:
- EP-A1- 2 009 551
- NIAN-FENG TZENG: "RECONFIGURATION AND ANALYSIS OF A FAULT-TOLERANT CIRCULAR BUTTERFLYPARALLEL SYSTEM", IEEE TRANSACTIONS ON PARALLEL AND DISTRIBUTED SYSTEMS, IEEE SERVICE CENTER, LOS ALAMITOS, CA, US, vol. 4, no. 8, 1 August 1993 (1993-08-01), pages 855-863, XP000433114, ISSN: 1045-9219, DOI: 10.1109/71.238621
- DERK M D ET AL: "Dynamic reconfiguration for fault tolerance for critical, real-time processor arrays", SIGNALS, SYSTEMS AND COMPUTERS, 1994. 1994 CONFERENCE RECORD OF THE TW ENTY-EIGHTH ASILOMAR CONFERENCE ON PACIFIC GROVE, CA, USA 31 OCT.-2 NOV. 1994, LOS ALAMITOS, CA, USA,IEEE COMPUT. SOC, US, vol. 2, 31 October 1994 (1994-10-31), pages 1058-1062, XP010148740, DOI: 10.1109/ACSSC.1994.471621 ISBN: 978-0-8186-6405-2

## Description

### TECHNICAL FIELD

The present invention relates to configuration of interconnected modules of electronic circuits that ensures fault-tolerant operation.

### BACKGROUND

Complex computing systems may need a significant number of electronic circuits to operate. Supercomputers, for example, may require hundreds of thousands of microprocessors to simulate complex physical processes. The computing elements may have to operate in parallel to simultaneously execute complex logical operations. Typically, the operational electronic circuits are arranged as a cubic lattice having cyclic boundary conditions to achieve an effect of pseudo-infinite, three-dimensional lattice.

One significant problem in design of such systems is the physical positioning of electronic circuits in space. In order to achieve satisfactory performance, the following factors should be taken into account: small number and short length of inter-circuit connections, efficient heat dissipation, system scalability enabling to add new circuits and system redundancy enabling to shut off some circuits without interrupting operation and positioning of the other circuits.

A publication "Reconfiguration and analysis of a fault-tolerant circular butterfly parallel system" (Nian-Feng Tzeng, IEEE Transactions on Parallel and Distributed Systems, IEEE Service Center, Los Alamitor, CA, US, vol. 4, no. 8, 1 August 1993) discloses a fault-tolerant technique for a circular butterfly parallel system to ensure its rigid full butterfly structure even in the presence of failures, addressing reconfiguration in retail. A resulting butterfly system is described with L levels that involves (1/log₂L)% spare PE's and approximately 50% additional links.

A European patent application EP2009551A discloses a method for switching to a spare processor during runtime, and a processing system that determines that execution should be migrated off of an active processor. An operating system (OS) scheduler and at least one device are then paused, and the active processor is put into an idle state. State data from writable and substantially non-writable stores in the active processor is loaded into the spare processor. Interrupt routing table logic for the processing system is dynamically reprogrammed to direct external interrupts to the spare processor. The active processor may then be off-lined, and the device and OS scheduler may be unpaused or resumed. Threads may then be dispatched to the spare processor for execution.

A publication "Dynamic reconfiguration for fault tolerance for critical, real-time processor arrays" (Derk M D et al, Signals, Systems and Computers, 1994, 1994 Conference Record of the Twenty-Eigthth Asilomar Conference on Pacific Grove, CA, USA, 31 Oct - 2 Nov 1994, Los Alamitos CA, USA) discloses a local area reconfiguration algorithm for a rectangular processor array, wherein if all the spares in a local area are used, areas can be combined in a software controlled process, preventing a system failure.

There is a need for providing a redundant configuration of physical arrangement of electronic modules, which would allow to minimize the downtime of system operation and minimize the loss of results of logical operations due to a failure of a system module.

### SUMMARY

The present invention is related to a system of electronic modules having a redundant configuration and a method for reconfiguring a system of electronic modules, as defined in the accompanying independent claims 1 and 3. The invention provides a configuration of arrangement of electronic modules that makes the system prone to failure of one pair of modules or to failure of one pair of modules and/or signal lines connecting this pair with other modules.

### BRIEF DESCRIPTION OF DRAWINGS

The invention is presented by means of exemplary embodiments on a drawing, in which:
Fig. 1 presents a semi-infinite series of N electronic modules according to the configuration known from the prior art.
Fig. 2A, 2B present a first embodiment of the invention.
Fig. 3A, 3B present a second embodiment of the invention.

### DETAILED DESCRIPTION

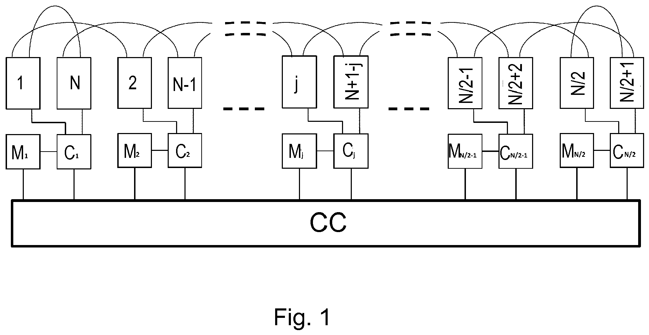

Fig. 1 presents a semi-infinite series of N electronic modules according to the configuration known from the prior art. Each module is connected with every other module, as presented for example in a US patent US5715391. They form a three-dimensional torus topology. Two boundary modules of the series: module 1 and module N are connected together which provides cyclic boundary conditions.

In the system presented in Fig. 1, the modules exchange information with each other using leap connections according to the following rule: 1↔2↔...↔j↔...↔N/2 and N↔(N-1)↔...↔ (N+1-j)↔...↔(N/2+1). The two boundary connections 1↔N and N/2↔(N/2+1) allow closing the cyclic boundary conditions. The results of the analysis performed by the modules are written, at times t₁, t₂, ... tₘ, by means of corresponding computers referenced as C₁ to C_{N/2}, to memories referenced as M₁ to M_{N/2}. The memories are accessible to a central computer CC that can read data therefrom to perform further processing of the analyses, calculations and simulations conducted by the system. A failure of one pair of the modules (for example, a failure of the pair referenced as *j*) will cause disconnection of the semi-infinite series of modules, which will require to stop the operation of the whole system. The system can be restarted then only after the failure is eliminated.

### Protection against consequences of a failure of one pair of modules

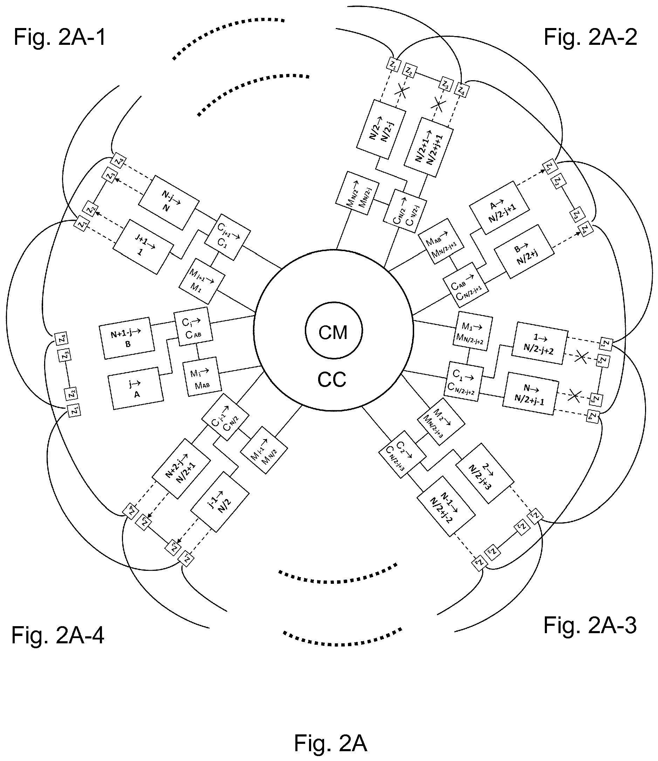

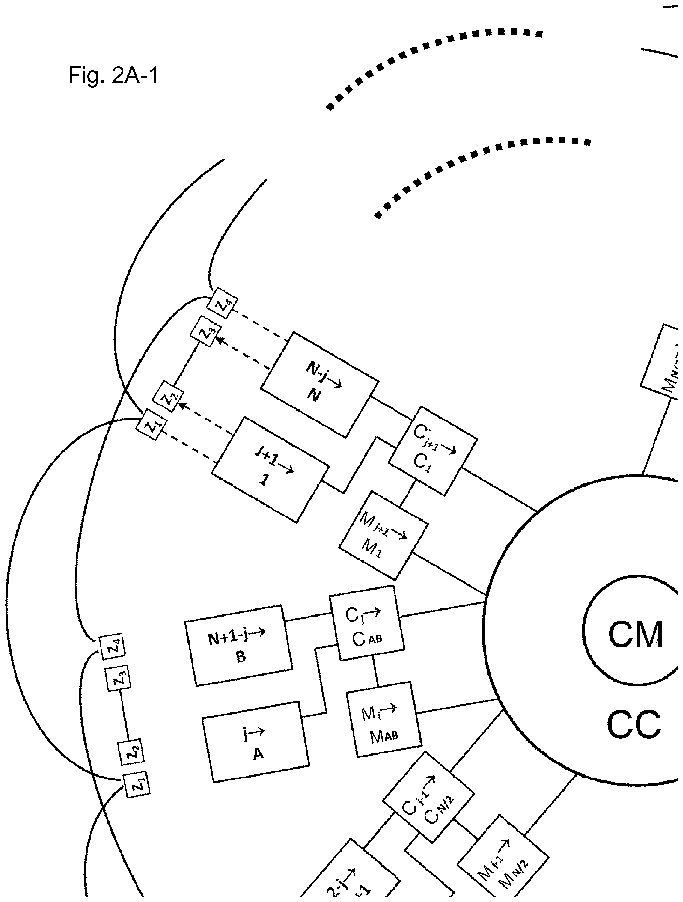

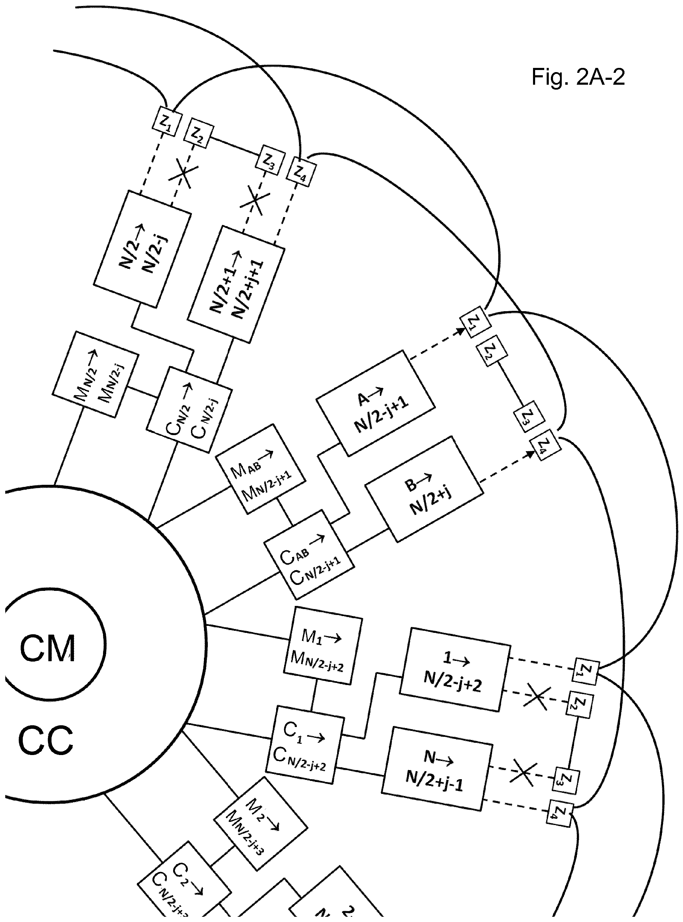

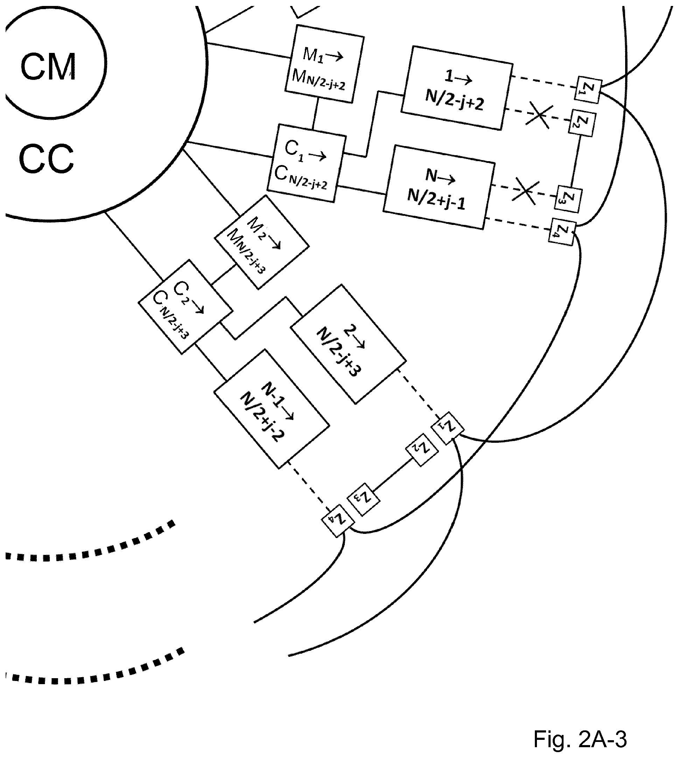

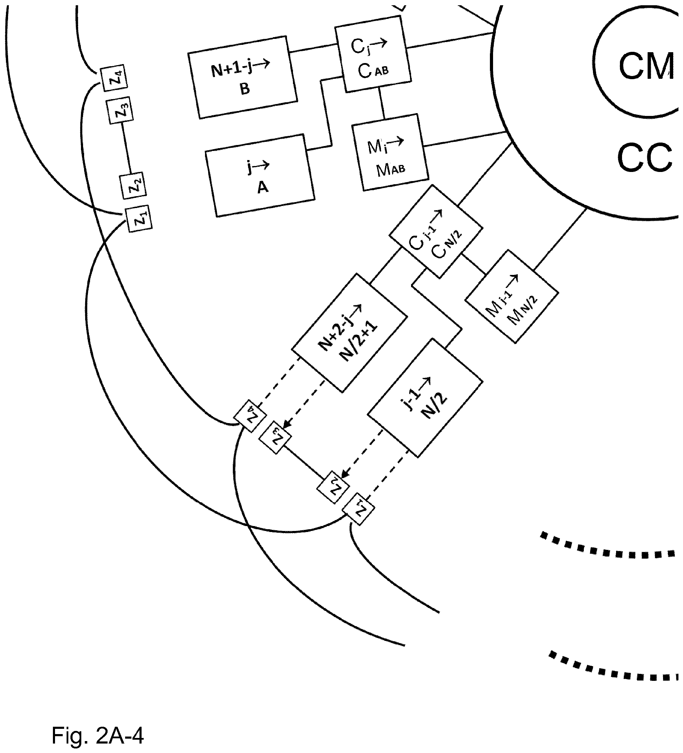

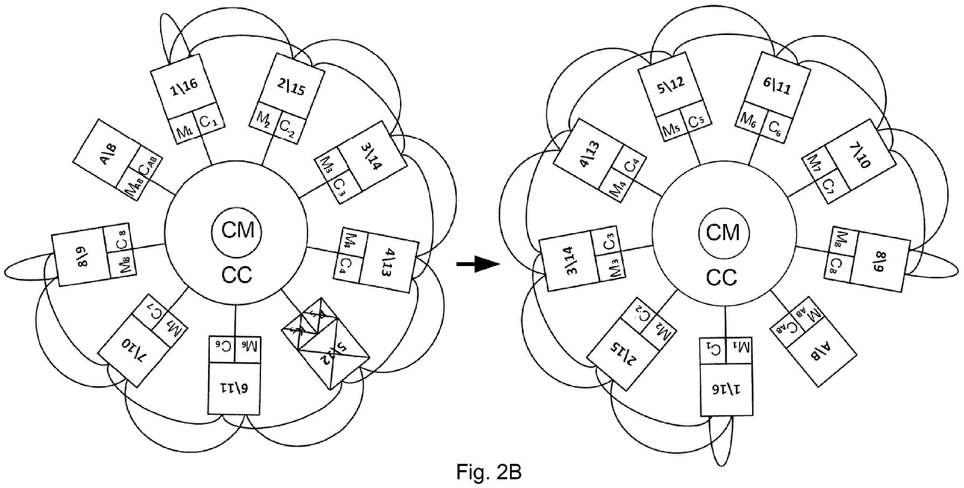

Figs. 2A and 2B present the arrangement of electronic modules according to the first embodiment of the invention. In this embodiment, in addition to the *N*/2 primary pairs of modules, one additional pair of modules is used. The additional pair allows to reconfigure the system in the case of a failure of one of the primary pairs of modules.

The presented embodiment allows for significant reduction of downtime of operation of a system presented in Fig. 1, caused by failures of pair of the primary modules. It is achieved by adding to the system a central memory (CM). At times t₁, t₂, ... tₘ, the content of the memory Mᵢ assigned to the subsequent pairs (numbered from 1 to N/2) of modules is written to the central memory CM. The pairs of modules are arranged on a circumference of a circle. An additional pair of modules A\B is arranged between the boundary pairs of the primary modules 1\N and N/2\(N/2+1). The additional pair of modules A\B is connected to the additional computer C_{AB} and to the additional memory M_{AB}. In comparison to the series of two modules presented in Fig. 1, the computers Cᵢ not only write, at the times t₁, t₂, ... tₘ, the results of the analysis performed by the modules to the individual memories Mᵢ, but they also read logical states of these modules and write them to the Mᵢ. All of the modules, including the pair A\B, are physically connected together by signal lines (solid lines shown in Fig. 2A). However, their terminals are connected to the logical circuits (dashed lines in Fig. 2A) in an electronic manner using connectors Z₁, Z₂, Z₃ and Z₄ which are assigned to each pair of modules. It allows for a dynamical change of configuration of connections between the modules.

During system initiation, the additional pair of modules A\B is disconnected from the connectors, and therefore from the other modules as well.

Upon a failure of one pair of modules 1\N, 2\(N-1), .... N/2\(N/2+1) at a time t_{y} (such that tₓ<t_{y}<tₓ₊₁ for x=1,2...), for example upon a failure of the pair j\(N+1-j), the system is stopped, the failed pair j\(N+1-j) is disconnected and modules j\(N+1-j) are replaced by modules A\B. Depending on the location of the failure, the following operations are performed:
a) if the failed pair of modules is not the boundary one (1 <j<N/2), then the connections between the pairs of modules (j-1)\(N+2-j) and j\(N+1-j), as well as (j+1)\(N-j) and j\(N+1-j) are eliminated (no connections between modules and connectors Z (Z₁↔j and Z₄↔N+1-j) as indicated by the lack of dashed lines in Fig. 2A). In the next step, the two boundary connections 1↔N and N/2↔(N/2+1) are disconnected (crossed-out connections Z₂ and Z₃ in Fig. 2A) and they are connected to the additional pair of modules A\B in the following manner: 1↔A↔N/2 and N↔B↔(N/2+1) (dashed lines with arrows in Fig. 2A). Next, the modules (j-1)\(N+2-j) and (j+1)\(N-j) neighboring to the failed module j\(N+1-j) are internally connected (dashed lines with arrows in Fig.2A) and they become the boundary modules of the new series with cyclic boundary conditions (in a manner equivalent to the previous pairs 1↔N and N/2↔(N/2+1)).
b) in case of failure of the boundary pair of modules 1\N, the connections between one pair of neighboring modules 2\(N-1) are disconnected. The pair is internally connected (2↔N-1) to form the boundary modules of the new series with cyclic boundary conditions. The second boundary pair is formed by connecting modules A\B to each other and to modules N/2\(N/2+1). The connection is as follows: A↔B, N/2↔A and (N/2+1)↔B.
c) if a failure occurs on the other side (i.e. in the pair of modules N/2\(N/2+1)), then the connections between one pair neighboring modules (N/2-1)\(N/2+2) are disconnected, and the pair is internally connected (N/2-1↔(N/2+2)), thereby forming the boundary modules of the new series with cyclic boundary conditions. The second boundary pair is formed by modules A/B connected to each other and to modules 1\N. Their connection is as follows A↔B, 1↔A and N↔B.

After the connections between the modules are changed, the central computer CC renumbers the modules and assigns new references to computers Cᵢ and memories Mᵢ according to the rules depending on the location of the failure:
a) if the failed pair of modules j\(N+1-j) is not located at the end of the series (1<j<N/2), then the numbers of modules are changed according to the following rule: (j+i)\(N-j-i+1)→i(N-i+1) for i=1....(N/2-j), A\B→(N/2-j+1)\(N/2+j) and (j+i-1-N/2)\(3N/2+2-i-j)→i\(N-i+1) for i=N/2-j+2...N/2. The computers and the memories change their references as follows: Cⱼ₊ᵢ→Cᵢ and Mⱼ₊ᵢ→Mᵢ for i=1...N/2-j, C_{AB}→C_{N/2-j+1} and M_{AB}→M_{N/2-j+1} and C_{i-N/2+j-1}→Cᵢ and M_{i-N/2+j-1}→Mᵢ for i=N/2-j+2...N/2 (Fig. 2A).
b) in the case of failure of a pair of boundary modules 1\N (j=1), the numbers of modules are changed according to the rule: (i+1)\(N-i)→i\(N-i+1) for i=1....(N/2-1) and A\B→(N/2)\(N/2+1). The computers and their dedicated memories change their references as follows: Cᵢ₊₁→Cᵢ and Mᵢ₊₁→Mᵢ for i=1...(N/2-1), C_{AB}→C_{N/2} and M_{AB}→M_{N/2}.
c) in the case of failure of a pair of boundary modules N/2\(N/2+1) (j=N/2), the numbers of modules are changed according to the rule: A\B→1\N and i\(N+1-i)→(i+1)\(N-i) for i=1...(N/2-1). The computers and their dedicated memories change their references as follows: C_{AB}→C₁ and M_{AB}→M₁ and Cᵢ→Cᵢ₊₁ and Mᵢ→Mᵢ₊₁ for i=1...(N/2-1).

While the pair of the failed modules j\(N+1-j) is waiting for a repair, it is referenced as A\B (Fig. 2A). The change of numbering of the electronic modules allowed to create a new semi-infinite series. The new series can continue the further analysis of the previously performed task.

The left side of Fig.2B presents an example of a system formed of 16 modules connected in an alternate manner into pairs 1\16; 2\15; 3\14; 4\13; 5\12; 6\11; 7\10; 8\9 and one additional pair A\B, which are arranged on a circumference of a circle. The boundary modules 1\16 and 8\9 are connected together, thereby closing the series to form a semi-infinite three dimensional torus illustrated in Fig. 1. Assume that a failure occurred in the system (the crossed-out circuits) in the modules 5\12 (or in computer C₅ or in memory M₅). When the central computer detects the failure, then connections between the pairs of modules 5\12 and 4\13, as well as 5\12 and 6\11, are disconnected. Moreover, the internal connections in the modules 1\16 and 8\9 at the boundary are disconnected as well, and the modules 4 and 13, as well as 6 and 11 are connected internally. After the pairs of modules are renumbered, (as described with reference to Fig. 2A), the following series is obtained: 1\16→5\12; 2\15→6\11; 3\14→7\10; 4\13→8\9; 5\12→A\B; 6\11→1\16; 7\10→2\15; 8\9→3\14 and A\B→4\13. The renumbered system is ready to continue its operation, and the failed modules A\B are waiting for a repair (the configuration of the modules is shown on the right side of Fig. 2B).

### Protection against consequences of a failure of one pair of modules and/or signal lines connecting this pair with other modules

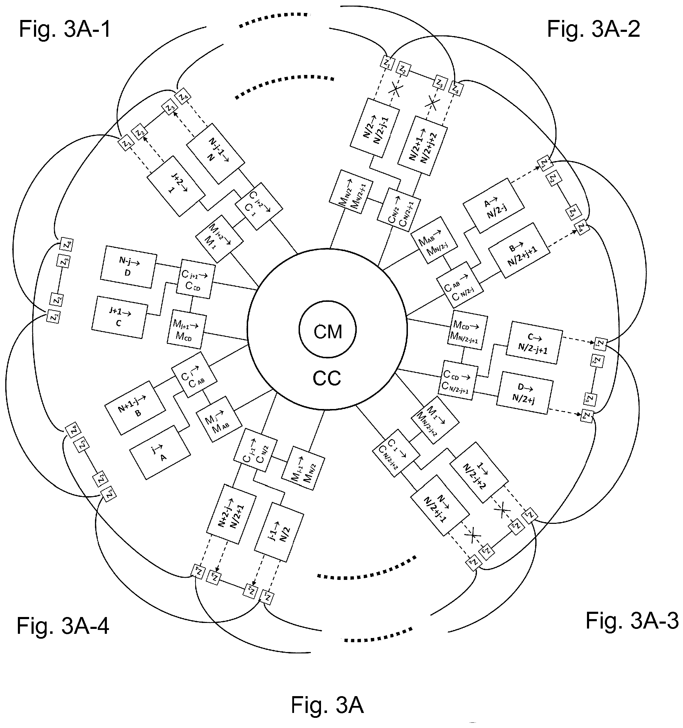

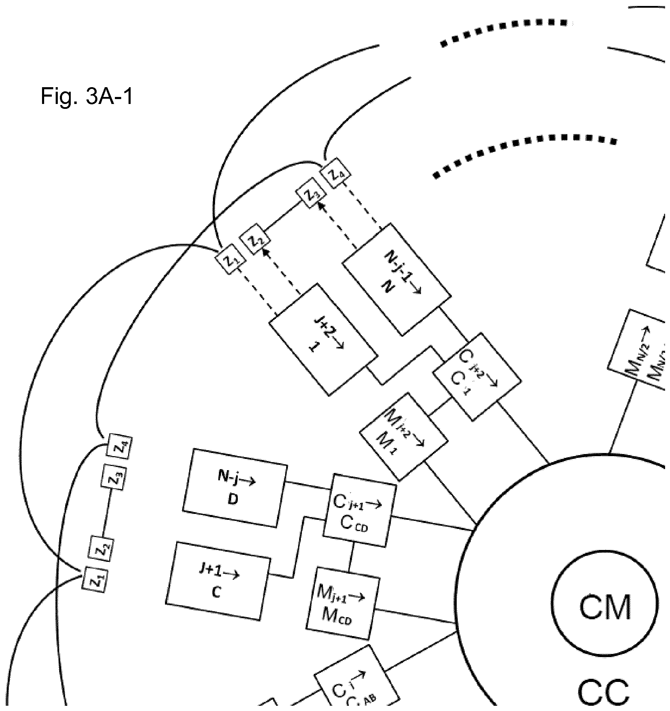

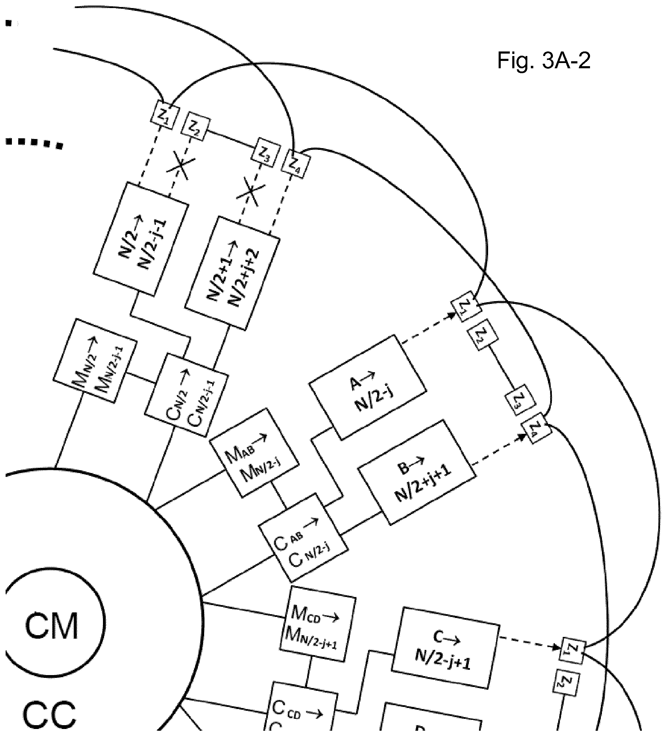

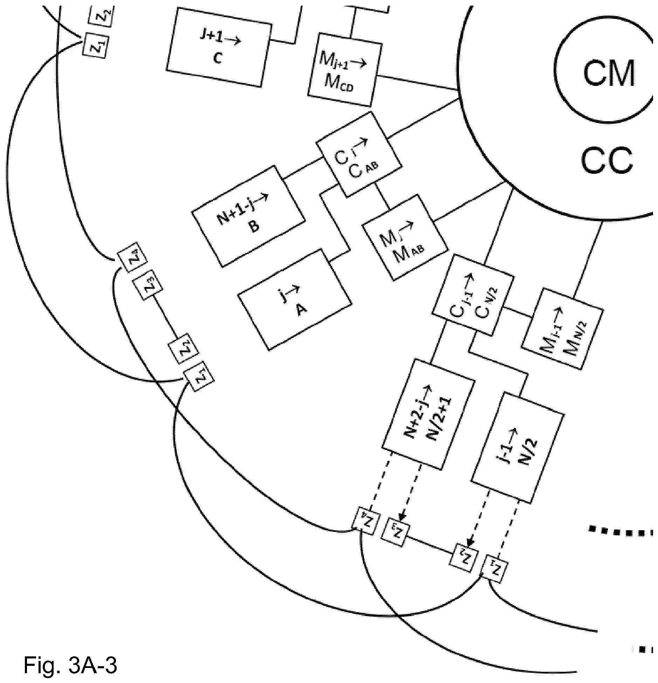

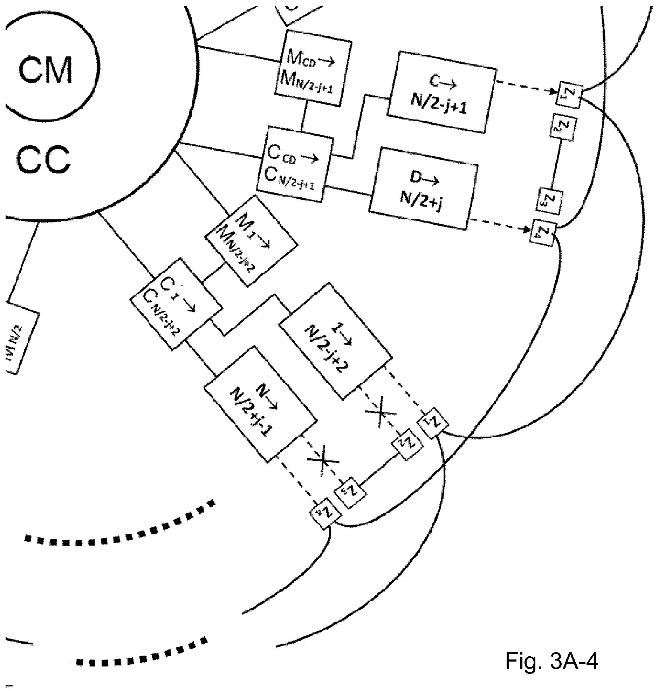

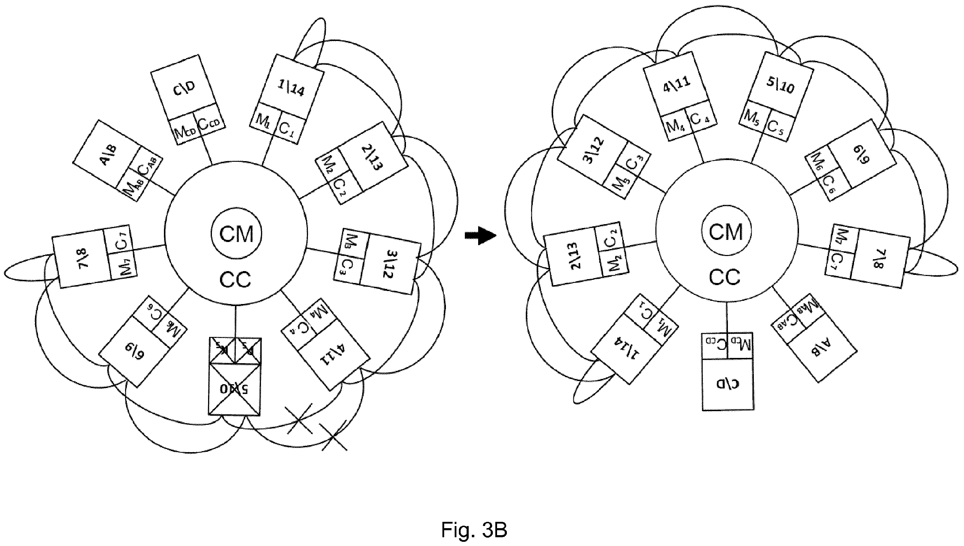

Fig. 3A, 3B present a second embodiment of the invention, regarding a location of the electronic modules with two additional pairs of modules, allowing for reconstruction of the system in case of failure of one pair of modules and/or signal lines connecting this pair with other modules.

The system equipped with one additional pair of modules, as presented in Figs. 2A-2B, is protected against consequences of the failure of one pair of modules. However, if the failure occurs at the connections between the modules or if the failure occurs in one module and causes dysfunction of the system and a disturbance through connections of the neighboring modules, then to secure the system there are needed two additional pairs of modules: A\B and C\D. In a manner similar to the system with one additional pair of modules, the pairs of modules are arranged on the circumference of a circle. The system is equipped with an additional central memory (CM), to which (at times t₁, t₂, ... tₘ) the content of the memory Mᵢ is written. It is written to the special sections numbered from 1 to N/2. Pairs of modules A\B and C\D are connected to the computers C_{AB} and C_{CD}, as well as to the memories M_{AB} and M_{CD}. Apart from writing the results of the analysis (at the times t₁, t₂, ... tₘ) to memory Mᵢ through the individual modules, the computer Cᵢ reads the logical states of the modules and writes them to the memory Mᵢ. All modules (including the pairs A\B and C\D) are physically connected via signal lines (solid lines in Fig. 3A). Their terminals are connected to the logical systems (dashed lines in Fig. 3A) electronically by connectors Z₁, Z₂, Z₃ and Z₄, which are assigned to every pair of modules. This solution allows for dynamic reconfiguration of the connections between the modules.

When the failure of the one pair of modules occurs, for example j\(N+1-j) and/or of the connections between the modules j\(N+1-j) and (j+1)\(N-j), at the time t_{y} (such that tₓ<t_{y}<tₓ₊₁ for x=1,2...), then the system operation is stopped, the section of modules j\(N+1-j) and (j+1)\(N-j) are disconnected and modules j\(N+1-j) and (j+1)\(N-j) are replaced by modules A\B and C\D. Depending on the location of the failure, the following operations can be conducted:
d) if the failed two pairs of modules are not the boundary modules (2<j<(N/2+2)), the connections between modules (j-1)\(N+2-j) and j\(N+1-j); (j+1)\(N-j) and j\(N+1-j) as well as (j+1)\(N-j) and (j+2)\(N-j-1) are eliminated (no connections, the lack of dashed lines in Fig. 3A, between modules and connectors Z). In the next step, the boundary connections 1↔N and N/2↔(N/2+1) are disconnected (crossed-out connections Z₂ and Z₃ in Fig. 3A) and they are connected to the two additional modules A\B and C\D in the following manner: N/2↔A↔C↔1 and (N\2+1)↔B↔D↔N. Then, modules (j-1)\(N+2-j) and (j+2)\(N-j-1) neighboring to j\(N+1-j) and (j+1)\(N-j) are internally connected (dashed lines with arrows in Fig. 3A) becoming the boundary modules for the new series with cyclic boundary conditions (such as the previous pairs 1↔N and N/2↔(N/2+1)).
e) in the case of a failure of a pair of modules 1\N (or 2\(N-1)) and/or of the connections between the pairs of modules 1\N and 2\(N-1), the connections between the pairs of neighboring modules 1\N and 2\(N-1) as well as 2\(N-1) and 3\(N-2), are disconnected. Thus, the pair 3\(N-2) is internally connected to (3↔(N-2)), forming the boundary modules of the new series with cyclic boundary conditions. On the other end of the system the following connections are made: N/2↔A↔C and (N/2+1)↔B↔D. Then, the modules C and D in the pair C\D are internally connected as C↔D.
f) if a failure occurs at the other side, i.e. in the pair of modules (N/2-1)\(N/2+2) (or N/2\(N/2+1)) and/or in the connections between the pairs of modules (N/2-1)\(N/2+2) and N/2\(N/2+1), then the connections between the neighboring modules (N/2-2)\(N/2+3) and (N/2-1)\(N/2+2), as well as (N/2-1)\(N/2+2) and N/2\(N/2+1), are disconnected. Thus, the pair (N/2-2)\(N/2+3) is internally connected (N/2-2)↔(N/2+3) and forms a pair of modules for the new series with cyclic boundary conditions. On the other side of the system, the following connections 1↔C↔A and N↔D↔B will occur. Modules A and B in the pair A\B will be internally connected as A↔B.

When the connections are changed, the central computer CC renumbers the modules and computers Cᵢ and their memories Mᵢ according to the rules depending on the location of the failure:
d) if the failed two pairs of modules are not the boundary modules (2<j<(N/2+2)), then the numbers of modules are changed according to the rule (j+i+1)\(N-j-i)→\(N-i+1) for i=1....(N/2-j-1), A\B→(N/2-j)\(N/2+j+1), C\D→(N/2-j+1)\(N/2+j) and (j+i-1-N/2)\(3N/2+2-i-j)→i\(N+1-i) for i=N/2-j+2...N/2. The computers and their memories change their references as follows: Cⱼ₊ᵢ₊₁→Cᵢ and Mⱼ₊ᵢ₊₁→Mᵢ for i=1...(N/2-j-1), C_{AB}→C_{N/2-j} and M_{AB}→M_{N/2-j}, C_{CD}→C_{N/2-j+1} and M_{CD}→M_{N/2-j+1} also C_{i-N/2+j-1}→Cᵢ and M_{i-N/2+j-1}→Mᵢ for i=N/2-j+2...N/2 (Fig. 3A).
e) in the case of a failure in the pairs of modules: 1\N (or 2\(N-1)) and/or on the connections between modules 1\N and 2\(N-1), the numbers of modules are changed by the rule (i+2)\(N-i-1)→i\(N-i+1) for i=1....(N/2-2), A\B→(N/2-1)\(N/2+2) and C\D→N/2\(N/2+1). The computers and their dedicated memories are referenced as: Cᵢ₊₂→Cᵢ and Mᵢ₊₂→Mᵢ for i=1...(N/2-2), C_{AB}→C_{N/2-1} and MAB→M_{N/2-1} and C_{CD}→C_{N/2} M_{CD}→M_{N/2}.
f) if a failure occurs at the other side, i.e. in the pair of modules (N/2-1)\(N/2+2) (or N/2\(N/2+1)) and/or in the connections between the pairs of modules (N/2-1)\(N/2+2) and N/2\(N/2+1), then the numbers of modules are changed as follows: A\B→1\N, C\D→2/(N-1) and i\(N+1-i)→(i+2)\(N-i-1) for i=1...(N/2-2). Consequently, the computers and their dedicated memories are referenced as: C_{AB}→C₁ and M_{AB}→M₁, C_{CD}→C₂ and M_{CD}→M₂ and Cᵢ→Cᵢ₊₂ and Mᵢ→Mᵢ₊₂ for i=1...(N/2-2).

The two of pairs of modules j\(N+1-j) and (j+1)\(N-j), i.e. the modules between which the failed connection occurred, and/or the pairs that failed, are renamed to A\B and C\D (Fig. 3A). Then, they are waiting for a repair and properly operating modules of the renumbered semi-infinite series can continue the analysis of the previously performed task.

Fig. 3B presents an example of a system formed of 14 modules alternately connected into pairs 1\14; 2\13; 3\12; 4\11; 5\10; 6\9; 7\8 and comprising two additional pairs A\B and C\D arranged on the circumference of a circle. The boundary modules 1\14 and *7*\*8* are connected together, closing the series into a structure of a semi-infinite three dimensional torus, as illustrated in Fig. 1. The left side of Fig 3B presents a system, in which the one pair of modules, namely modules 5\10, have failed. This caused disturbances on the connections between the pairs of modules 4\11 and 5\10. The disturbances stop the proper operation of modules 4\11 (the crossed-out circuits and connections). When the central computer CC detects a failure, the connections between modules 5\10 and 6\9, 5\10 and 4\11, 4\11 and 3\12 are disconnected. Moreover, the internal connections in the boundary modules 1\14 are 7\8 disconnected, and modules 6 and 9 as well as 3 and 12, are connected internally. After the renumbering (as described in Fig. 3A) the following numbers are assigned: 1\14→5\10; 2\13→6\9; 3\12→7\8; 4\11→A\B; 5\10→C\D; 6\9→1\14; 7\8→2\13; A\B→3\12 and C\D→4\11. The renumbered system is ready to continue its operation, and the failed modules A\B and C\D are waiting for a repair (a configuration of the modules if presented on the right side of Fig. 3B).

After the reconfiguration of connections and numbering in the systems including one additional pair (Fig. 2A and 2B) or two additional pairs of modules (Fig. 3A and 3B) is finished, the system can continue its operation. In order to achieve this, the central computer CC writes the content of subsequent sections of the central memory CM to the corresponding new areas of memory Mᵢ. The written data corresponds to the logical state of the machine at the time tₓ (earlier than the time t_{y} when the failure occurred). The computers Cᵢ assigned to each pair of modules i\(N+1-i) write the content of these memory areas to their corresponding modules. Then, the process of analysis finished at time tₓ is continued. As a result, there are lost only the results of the analysis which were executed between the times tₓ and t_{y}. The use of the additional (redundant) pair of modules, along with the presented reconfiguration method, allows to minimize the system operation downtime allows to repair the failed elements during execution of logical operations.

## Claims

1. A system of electronic modules having a redundant configuration, the modules being connected to form a structure of a semi-infinite three dimensional torus, the system comprising primary pairs of electronic modules (1, ..., N) connected to neighboring primary pairs to form a semi-infinite series, wherein each primary pair of electronic modules is connected to a corresponding computer (C₁, ..., C_{N/2}), the computer (C₁, ..., C_{N/2}) being connected to a corresponding memory (M₁, ..., M_{N/2}), wherein the memories (M₁, ..., M_{N/2}) of the primary pairs of electronic modules (1, ..., N) are connected to the central computer (CC), wherein:
- the primary pairs of electronic modules (1, ..., N) are arranged on the circumference of a circle;
- the system further comprises a first additional pair of electronic modules (A, B) which is arranged on the circumference of the circle between the primary pairs of electronic modules (1, ..., N), which is connected to a corresponding computer (C_{AB}) connected to a corresponding memory (M_{AB});
- wherein all pairs of modules (1, ..., N, A, B) are connected to the neighboring pairs of modules by signal lines, to which they are connected via connectors (Z₁-Z₄), wherein the connectors are active for the primary pairs of modules (1, ..., N) and inactive for the additional pair of modules (A, B);
- and wherein the central computer (CC) is connected to the central memory (CM);
and wherein the components of the system are configured to:
- cyclically write data representing the content of the memory (M₁, ..., M_{N/2}) of the primary modules and the logical states of these modules to the central memory (CM);
- in the case of a failure of one primary pair of modules (1, ..., N):
- stop the operation of the system;
- inactivate the connectors (Z₁-Z₄) for the failed pair of modules (1, ..., N);
- activate the connectors (Z₁-Z₄) for the first additional pair (A, B) of modules;
- renumber the pairs of modules having active connectors (Z₁-Z₄) within the structure of the three dimensional torus, denoting the modules as the primary modules (1, ..., N);
- write the data stored in the central memory (CM) before the failure occurred to the memories (M₁, ..., M_{N/2}) of the pairs of primary modules;
- resume operation of the system.

2. The system according to claim 1, **characterized in that** it further comprises a second additional pair of electronic modules (C, D) arranged on the circumference of the circle between the primary pairs of electronic modules (1, ..., N) and the first additional pair of electronic modules (A, B), the second additional pair of electronic modules (C, D) being connected to its corresponding computer (C_{CD}) connected with a corresponding memory (M_{CD}) and connected to neighboring pairs of modules by signal lines, to which the modules (C, D) are connected via connectors (Z₁-Z₄), which are inactive for the second additional pair (C, D).

3. A method for reconfiguring a system of electronic modules, the modules being connected to form a structure of a semi-infinite three dimensional torus, the system comprising primary pairs of electronic modules (1, ..., N) connected to neighboring primary pairs to form a semi-infinite series, wherein each primary pair of electronic modules is connected to a corresponding computer (C₁, ..., C_{N/2}), the computer (C₁, ..., C_{N/2}) being connected to a corresponding memory (M₁, ..., M_{N/2}), wherein the memories (M₁, ..., M_{N/2}) of the primary pairs of electronic modules (1, ..., N) are connected to the central computer (CC), wherein:
- the primary pairs of electronic modules (1, ..., N) are arranged on the circumference of a circle;
- the system further comprises a first additional pair of electronic modules (A, B) which is arranged on the circumference of the circle between the primary pairs of electronic modules (1, ..., N), which is connected to a corresponding computer (C_{AB}) connected to a corresponding memory (M_{AB});
- wherein all pairs of modules (1, ..., N, A, B) are connected to the neighboring pairs of modules by signal lines, to which they are connected via connectors (Z₁-Z₄), wherein the connectors are active for the primary pairs of modules (1, ..., N) and inactive for the additional pair of modules (A, B);
- and wherein the central computer (CC) is connected to the central memory (CM);
and wherein the method comprises the following steps:
- cyclically writing data representing the content of the memory (M₁, ..., M_{N/2}) of the primary modules and the logical states of these modules to the central memory (CM);
- in the case of a failure of one primary pair of modules (1, ..., N):
- stopping the operation of the system;
- inactivating the connectors (Z₁-Z₄) for the failed pair of modules (1, ..., N);
- activating the connectors (Z₁-Z₄) for the first additional pair (A, B) of modules;
- renumbering the pairs of modules having active connectors (Z₁-Z₄) within the structure of the three dimensional torus, denoting the modules as the primary modules (1, ..., N);
- writing the data stored in the central memory (CM) before the failure occurred to the memories (M₁, ..., M_{N/2}) of the pairs of primary modules;
- resuming operation of the system.

## Patentansprüche

1. System aus elektronischen Modulen, das eine redundante Konfiguration aufweist, wobei die Module verbunden sind, um eine Struktur eines halbunendlichen dreidimensionalen Torus zu bilden, wobei das System primäre Paare elektronischer Module (1, ..., N) beinhaltet, die mit benachbarten primären Paaren verbunden sind, um eine halbunendliche Serie zu bilden, wobei jedes primäre Paar elektronischer Module mit einem entsprechenden Computer (C₁, ..., C_{N/2}) verbunden ist, wobei der Computer (C₁, ..., C_{N/2}) mit einem entsprechenden Speicher (M₁, ..., M_{N/2}) verbunden ist, wobei die Speicher (M₁, ..., M_{N/2}) der primären Paare elektronischer Module (1, ..., N) mit dem Zentralcomputer (CC) verbunden sind, wobei:
- die primären Paare elektronischer Module (1, ..., N) auf dem Umfang eines Kreises angeordnet sind;
- das System ferner ein erstes zusätzliches Paar elektronischer Module (A, B) beinhaltet, das auf dem Umfang des Kreises zwischen den primären Paaren elektronischer Module (1, ..., N) angeordnet ist, das mit einem entsprechenden Computer (C_{AB}) verbunden ist, der mit einem entsprechenden Speicher (M_{AB}) verbunden ist;
- wobei alle Paare Module (1, ..., N, A, B) mit den benachbarten Paaren Module durch Signalleitungen verbunden sind, mit denen sie über Verbinder (Z₁-Z₄) verbunden sind, wobei die Verbinder für die primären Paare Module (1, ..., N) aktiv und für das zusätzliche Paar Module (A, B) inaktiv sind;
- und wobei der Zentralcomputer (CC) mit dem Zentralspeicher (CM) verbunden ist;
und wobei die Komponenten des Systems konfiguriert sind, um:
- zyklisch Daten, die den Inhalt des Speichers (M₁, ..., M_{N/2}) der primären Module und die logischen Zustände dieser Module repräsentieren, an den Zentralspeicher (CM) zu schreiben;
- im Fall eines Ausfalls von einem primären Paar Module (1, ..., N):
- den Betrieb des Systems zu unterbrechen;
- die Verbinder (Z₁-Z₄) für das ausgefallene Paar Module (1, ..., N) zu inaktivieren;
- die Verbinder (Z₁-Z₄) für das erste zusätzliche Paar (A, B) Module zu aktivieren;
- die Paare Module, die innerhalb der Struktur des dreidimensionalen Torus aktive Verbinder (Z₁-Z₄) aufweisen, neu zu nummerieren, um die Module als die primären Module (1, ..., N) zu bezeichnen;
- die im Zentralspeicher (CM) vor dem Auftreten des Ausfalls gespeicherten Daten an die Speicher (M₁, ..., M_{N/2}) der Paare primärer Module zu schreiben;
- den Betrieb des Systems fortzusetzen.

2. System gemäß Anspruch 1, **dadurch gekennzeichnet**, das es ferner ein zweites zusätzliches Paar elektronischer Module (C, D) beinhaltet, das auf dem Umfang des Kreises zwischen den primären Paaren elektronischer Module (1, ..., N) und dem ersten zusätzlichen Paar elektronischer Module (A, B) angeordnet ist, wobei das zweite zusätzliche Paar elektronischer Module (C, D) mit seinem entsprechenden Computer (C_{CD}) verbunden ist, der mit einem entsprechenden Speicher (M_{CD}) verbunden ist, und mit benachbarten Paaren Module durch Signalleitungen verbunden ist, mit denen die Module (C, D) über Verbinder (Z₁-Z₄) verbunden sind, die für das zweite zusätzliche Paar (C, D) inaktiv sind.

3. Verfahren zum Neukonfigurieren eines Systems aus elektronischen Modulen, das eine redundante Konfiguration aufweist, wobei die Module verbunden sind, um eine Struktur eines halbunendlichen dreidimensionalen Torus zu bilden, wobei das System primäre Paare elektronischer Module (1, ..., N) beinhaltet, die mit benachbarten primären Paaren verbunden sind, um eine halbunendliche Serie zu bilden, wobei jedes primäre Paar elektronischer Module mit einem entsprechenden Computer (C₁, ..., C_{N/2}) verbunden ist, wobei der Computer (C₁, ..., C_{N/2}) mit einem entsprechenden Speicher (M₁, ..., M_{N/2}) verbunden ist, wobei die Speicher (M₁, ..., M_{N/2}) der primären Paare elektronischer Module (1, ..., N) mit dem Zentralcomputer (CC) verbunden sind, wobei:
- die primären Paare elektronischer Module (1, ..., N) auf dem Umfang eines Kreises angeordnet sind;
- das System ferner ein erstes zusätzliches Paar elektronischer Module (A, B) beinhaltet, das auf dem Umfang des Kreises zwischen den primären Paaren elektronischer Module (1, ..., N) angeordnet ist, das mit einem entsprechenden Computer (C_{AB}) verbunden ist, der mit einem entsprechenden Speicher (M_{AB}) verbunden ist;
- wobei alle Paare Module (1, ..., N, A, B) mit den benachbarten Paaren Module durch Signalleitungen verbunden sind, mit denen sie über Verbinder (Z₁-Z₄) verbunden sind, wobei die Verbinder für die primären Paare Module (1, ..., N) aktiv und für das zusätzliche Paar Module (A, B) inaktiv sind;
- und wobei der Zentralcomputer (CC) mit dem Zentralspeicher (CM) verbunden ist;
und wobei das Verfahren die folgenden Schritte beinhaltet:
- zyklisches Schreiben von Daten, die den Inhalt des Speichers (M₁, ..., M_{N/2}) der primären Module und die logischen Zustände dieser Module repräsentieren, an den Zentralspeicher (CM);
- im Fall eines Ausfalls von einem primären Paar Module (1, ..., N):
- Unterbrechen des Betriebs des Systems;
- Inaktivieren der Verbinder (Z₁-Z₄) für das ausgefallene Paar Module (1, ..., N);
- Aktivieren der Verbinder (Z₁-Z₄) für das erste zusätzliche Paar (A, B) Module;
- Neu nummerieren der Paare Module, die innerhalb der Struktur des dreidimensionalen Torus aktive Verbinder (Z₁-Z₄) aufweisen, um die Module als die primären Module (1, ..., N) zu bezeichnen;
- Schreiben der im Zentralspeicher (CM) vor dem Auftreten des Ausfalls gespeicherten Daten an die Speicher (M₁, ..., M_{N/2}) der Paare primärer Module;
- Fortsetzen des Betriebs des Systems.

## Revendications

1. Système de modules électroniques présentant une configuration redondante, lesdits modules étant connectés pour former une structure d'un tore tridimensionnel semi-infini, le système comprenant des paires primaires de modules électroniques (1, ..., N) connectées à des paires primaires voisines pour former une série semi-infinie, chaque paire primaire de modules électroniques étant connectée à un ordinateur correspondant (C₁, ..., C_{N/2}), ledit ordinateur (C₁, ..., C_{N/2}) étant connecté à une mémoire correspondante (M₁, ..., M_{N/2}), lesdites mémoires (M₁, ..., M_{N/2}) des paires primaires de modules électroniques (1, ..., N) étant connectées à l'ordinateur central (CC) :
- lesdites paires primaires de modules électroniques (1, ..., N) étant agencées sur la circonférence d'un cercle ;
- le système comprenant en outre une première paire supplémentaire de modules électroniques (A, B) agencée sur la circonférence dudit cercle entre les paires primaires de modules électroniques (1, ..., N), connectée à un ordinateur correspondant (C_{AB}) connecté à une mémoire correspondante (M_{AB}) ;
- toutes lesdites paires de modules (1, ..., N, A, B) étant connectées aux paires voisines de modules par des lignes de signaux,auxquelles elles sont connectées par l'intermédiaire de connecteurs (Z₁-Z₄), lesdits connecteurs étant actifs pour les paires primaires de modules (1, ..., N) et inactifs pour la paire supplémentaire de modules (A, B) ;
- et ledit ordinateur central (CC) étant connecté à la mémoire centrale (CM) ;
et lesdits composants du système étant configurés pour :
- écrire de manière cyclique des données représentant le contenu de la mémoire (M₁, ..., M_{N/2}) des modules primaires et des états logiques de ces modules dans la mémoire centrale (CM) ;
- dans le cas d'une défaillance d'une paire primaire de modules (1, ..., N) :
- arrêter le fonctionnement du système ;
- désactiver les connecteurs (Z₁-Z₄) pour la paire de modules (1, ..., N) défaillante ;
- activer les connecteurs (Z₁-Z₄) pour la première paire supplémentaire (A, B) de modules ;
- renuméroter les paires de modules possédant de connecteurs actifs (Z₁-Z₄) au sein de la structure du tore tridimensionnel, désignant les modules comme les modules primaires (1, ..., N) ;
- écriture des données stockées dans la mémoire centrale (CM) avant que la défaillance de ne produise dans6 les mémoires (M₁, ..., M_{N/2}) des paires de modules primaires ;
- reprendre le fonctionnement du système.

2. Système selon la revendication 1, **caractérisé en ce qu'**il comprend en outre une seconde paire supplémentaire de modules électroniques (C, D) agencée sur la circonférence du cercle entre les paires primaires de modules électroniques (1, ..., N) et la première paire supplémentaire de modules électroniques (A, B), ladite seconde paire supplémentaire de modules électroniques (C, D) étant connectée à son ordinateur correspondant (C_{CD}) connecté à une mémoire correspondante (M_{CD}) et connectée à des paires voisines de modules par les lignes de signaux, auxquelles les modules (C, D) sont connectés par l'intermédiaire de connecteurs (Z₁-Z₄), qui sont inactifs pour la deuxième paire supplémentaire (C, D).

3. Procédé permettant la reconfiguration d'un système de modules électroniques, les modules étant connectés pour former une structure d'un tore tridimensionnel semi-infini, ledit système comprenant des paires primaires de modules électroniques (1, ..., N) connectées à des paires primaires voisines pour former une série semi-infinie, chaque paire primaire de modules électroniques étant connectée à un ordinateur correspondant (C₁, ..., C_{N/2}), l'ordinateur (C₁, ..., C_{N/2}) étant connecté à une mémoire correspondante (M₁, ..., M_{N/2}), lesdites mémoires (M₁, ..., M_{N/2}) des paires primaires de modules électroniques (1, ..., N) étant connectées à l'ordinateur central (CC) :
- les paires primaires de modules électroniques (1, ..., N) étant agencées sur la circonférence d'un cercle ;
- le système comprenant en outre une première paire supplémentaire de modules électroniques (A, B) agencée sur la circonférence dudit cercle entre les paires primaires de modules électroniques (1, ..., N), connectée à un ordinateur correspondant (C_{AB}) connecté à une mémoire correspondante (M_{AB}) ;
- toutes lesdites paires de modules (1, ..., N, A, B) étant connectées aux paires voisines de modules par les lignes de signaux auxquelles elles sont connectées par l'intermédiaire de connecteurs (Z₁-Z₄), lesdits connecteurs étant actifs pour les paires primaires de modules (1, ..., N) et inactifs pour la paire supplémentaire de modules (A, B) ;
- et ledit ordinateur central (CC) étant connecté à la mémoire centrale (CM) ;
et ledit procédé comprenant les étapes suivantes :
- l'écriture de manière cyclique des données représentant le contenu de la mémoire (M₁,..., M_{N/2}) des modules primaires et les états logiques de ces modules dans la mémoire centrale (CM) ;
- dans le cas d'une défaillance d'une paire primaire de modules (1, ..., N) :
- l'arrêt du fonctionnement du système ;
- la désactivation des connecteurs (Z₁-Z₄) pour la paire de modules (1, ..., N) défaillante ;
- l'activation des connecteurs (Z₁-Z₄) pour la première paire supplémentaire (A, B) de modules ;
- la renumérotation des paires de modules possédant des connecteurs actifs (Z₁-Z₄) au sein de la structure du tore tridimensionnel, désignant les modules comme les modules primaires (1, ..., N) ;
- l'écriture des données stockées dans la mémoire centrale (CM) avant que la défaillance ne se produise dans les mémoire (M₁, ..., M_{N/2}) des paires de modules primaires ;
- la reprise du fonctionnement du système.
